(19) **Europäisches Patentamt / European Patent Office / Office européen des brevets**

(11) **EP 4 344 303 B1**

(12) **EUROPEAN PATENT SPECIFICATION**

(45) Date of publication and mention
of the grant of the patent:
**01.10.2025 Bulletin 2025/40**

(21) Application number: **21947668.6**

(22) Date of filing: **02.07.2021**

(51) International Patent Classification (IPC):
*H04W 48/20* (2009.01)     *H04W 36/30* (2009.01)

(52) Cooperative Patent Classification (CPC):
**H04W 36/302; H04W 48/20**

(86) International application number:
**PCT/CN2021/104261**

(87) International publication number:
**WO 2023/272721 (05.01.2023 Gazette 2023/01)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.03.2024 Bulletin 2024/13**

(73) Proprietor: **GUANGDONG OPPO MOBILE TELECOMMUNICATIONS CORP., LTD.**
**Dongguan, Guangdong 523860 (CN)**

(72) Inventors:
• **LI, Haitao**
  **Dongguan, Guangdong 523860 (CN)**
• **HE, Chuanfeng**
  **Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
WO-A1-2021/128058     CN-A- 112 690 022
CN-B- 104 365 146     US-A1- 2020 059 898

• **SAMSUNG: "Access control for RedCap UEs",** vol. RAN WG2, no. Online; 20210519 - 20210527, 11 May 2021 (2021-05-11), XP052007062, Retrieved from the Internet <URL:https://ftp.3gpp.org/tsg_ran/WG2_RL2/TSGR2_114-e/Docs/R2-2105472.zip R2-2105472.docx> [retrieved on 20210511]
• **DENSO CORPORATION: "Camping restriction and cell selection criterion",** vol. RAN WG2, no. Online; 20210519 - 20210527, 10 May 2021 (2021-05-10), XP052003858, Retrieved from the Internet <URL:https://ftp.3gpp.org/tsg_ran/WG2_RL2/TSGR2_114-e/Docs/R2-2105443.zip R2-2105443.docx> [retrieved on 20210510]
• **FUJITSU: "Cell reselection of RedCap UE",** vol. RAN WG2, no. electronic; 20210125 - 20210205, 15 January 2021 (2021-01-15), XP051973863, Retrieved from the Internet <URL:https://ftp.3gpp.org/tsg_ran/WG2_RL2/TSGR2_113-e/Docs/R2-2100755.zip R2-2100755 Cell reselection of RedCap UE_v1.doc> [retrieved on 20210115]

EP 4 344 303 B1

**(Cont. next page)**

- DENSO CORPORATION: "Camping restriction and cell selection criterion", 3GPP DRAFT; R2-2105443, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210519 - 20210527, 10 May 2021 (2021-05-10), Mobile Competence Centre ; 650, route des Lucioles ; F-06921 Sophia-Antipolis Cedex ; France , XP052003858
- SAMSUNG: "Access control for RedCap UEs", 3GPP DRAFT; R2-2105472, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210519 - 20210527, 11 May 2021 (2021-05-11), Mobile Competence Centre ; 650, route des Lucioles ; F-06921 Sophia-Antipolis Cedex ; France , XP052007062
- FUJITSU: "Camping restrictions of RedCap UE", 3GPP DRAFT; R2-2105399, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210519 - 20210527, 11 May 2021 (2021-05-11), Mobile Competence Centre ; 650, route des Lucioles ; F-06921 Sophia-Antipolis Cedex ; France , XP052007012

## Description

### TECHNICAL FIELD

The present disclosure relates to the field of communication technology, and in particular, to a communication method and a communication apparatus.

### BACKGROUND

Currently, with people's pursuit of speed, low latency, high-speed mobility, energy efficiency, and diversity and complexity of services in the future life, the 3rd Generation Partnership Project (3GPPG) has begun to develop 5G. Main application scenarios of 5G include Enhanced Mobile Broadband (eMBB), Ultra Reliable Low Latency Communications (URLLC) and Massive Machine Type Communications (mMTC).

In the related art, in order to support eMBB service, a New Radio (NR) system is designed to satisfy high speed, high spectrum efficiency, and large bandwidth requirements of eMBB service. However, in addition to eMBB service, there are also many different service types, such as sensor networks, video surveillance, wearable devices and other services, which have different requirements from eMBB service in terms of speed, bandwidth, power consumption, cost, etc. A terminal supporting the above services, having features of low complexity, low cost, and low capability, has a reduced capability (also called as RedCap) compared to a terminal supporting eMBB service.

Due to a reduction in the amount of receiving antennas or a reduction in antenna gain, a measurement result of a cell by a RedCap terminal will decrease compared with a non-RedCap terminal, causing the RedCap terminal to decide whether to camp in the cell based on a threshold of the non-RedCap terminal. As a result, the RedCap terminal is not able to find an available cell to camp, further affecting a cell coverage of the RedCap terminal and causing service interruption.

A 3GPP draft titled "Access control for RedCap UEs" discloses that UE should stay on the cell only if the signal strength of the cell is good enough. In both LTE and NR, this condition is determined by the cell selection criterion S. Network may provide a separate Qrxlevmin/Qqualmin in SIB1 for a RedCap UE with 1 Rx branch.

A 3GPP draft titled "Camping restriction and cell selection criterion" discloses that Qrxlevmin and Qquahnin are set to the value at the cell boundary aimed for the legacy UEs which support the default number of Rx branches in the standard. For 1 Rx UEs. if Orxlevmin and Qqualmin are the same as for the legacy UEs, 1 Rx UE experiences that coverage is shrunk. Instead of the CE mode like solution, it would be sufficient to extend the cell selection criteria at a minimum, so that 1 Rx UEs can experience the same coverage as for the legacy UEs. To enable this, separate Qrxlevmin and Qquahnin can be considered to introduce, which is specific to 1 Rx UEs. Alternatively, an offset value applied to Qrxlevmin and Qqualmin is introduced, in case of 1 Rx UEs.

A 3GPP draft titled "Cell reselection of RedCap UE" discloses that currently the cell reselection procedure involves measurements for intra-frequency and/or inter-frequency neighbour cells, cell reselection criteria evaluation (R criteria and priority-based criteria), cell access status checking and so on. In order for the RedCap UE to prioritize a cell that allows/prefers the RedCap operation without impacting the normal UE, the RedCap UE specific cell reselection parameters in the R criterion can also be introduced. For example, a lower $Qoffset_{s,n}$ value for the cells that prefer the RedCap operation can be broadcast for the RedCap UEs, making these cells rank higher than the cells that do not prefer the RedCap operation when the measurement results are similar.

### SUMMARY OF THE DISCLOSURE

Embodiments of the present disclosure provide a communication method and an apparatus, to solve the problem of a non-RedCap terminal being unable to find an available cell to camp.

A first aspect of the present disclosure provides a communication method performed by a terminal device. The communication method includes: determining a measurement result of a first cell; determining whether the first cell satisfies a cell selection criterion corresponding to a first-type terminal device according to the cell measurement result of the first cell and a first-cell selection parameter corresponding to the first-type terminal device. A capability of the first-type terminal device is lower than that of a second-type terminal device. The determining a measurement result of a first cell, includes: obtaining at least one beam measurement value of the first cell; generating the measurement result of the first cell according to the at least one beam measurement value of the first cell and a first threshold value of the beam measurement value corresponding to the first-type terminal device.

In some embodiments, the first-type terminal device corresponds to the first-cell selection parameter, and the second-type terminal device corresponds to a second-cell selection parameter; and the first-cell selection parameter is different from the second-cell selection parameter.

In some embodiments, the first-cell selection parameter includes at least one of the following: a threshold value of a received power, a threshold value of a signal quality, and an offset amount for preventing a ping-pong effect caused by radio environment fluctuations, a power-compensation value and a cell-reselection offset value.

In some embodiments, the first-cell selection parameter is determined according to the second cell-selection parameter and a first correction value.

In some embodiments, the first correction value is configured to correct the threshold value of the received power and the threshold value of the signal quality of the second-cell selection parameter.

In some embodiments, the first-cell selection parameter is configured for intra-frequency and/or inter-frequency cell reselection of the first-type terminal device.

In some embodiments, the cell measurement result of the first cell includes a received power of the first cell and a signal quality of the first cell.

In some embodiments, the determining whether the first cell satisfies a cell selection criterion corresponding to a first-type terminal device, includes: determining that the first cell satisfies the cell selection criterion corresponding to the first-type terminal device, in response to the received power of the first cell being greater than a first threshold and the signal quality of the first cell being greater than a second threshold.

In some embodiments, the first threshold value is determined according to a second threshold value of the beam measurement value corresponding to the second-type of terminal device and a second correction value.

A second aspect of the present disclosure provides a communication method performed by a network device. The communication method includes: sending a first-cell selection parameter corresponding to a first-type terminal device to a terminal device to allow the terminal device to determine whether a first cell satisfies a cell selection criterion corresponding to the first-type terminal device according to a cell measurement result of the first cell and the first-cell selection parameter corresponding to the first-type terminal device after obtaining at least one beam measurement value of the first cell and generate the cell measurement result of the first cell according to the at least one beam measurement value of the first cell and a first threshold value of the beam measurement value corresponding to the first-type terminal device, wherein a capability of the first-type terminal device is lower than that of a second-type terminal device.

In some embodiments, the first-type terminal device corresponds to the first-cell selection parameter, and the second-type terminal device corresponds to a second-cell selection parameter; and the first-cell selection parameter is different from the second-cell selection parameter.

A third aspect of the present disclosure provides a terminal device. The terminal device includes a measurement module and a processing module. The measurement module is configured to obtain at least one beam measurement value of a first cell and generate a measurement result of the first cell according to the at least one beam measurement value of the first cell and a first threshold value of the beam measurement value corresponding to a first-type terminal device. The processing module is configured to determine whether the first cell satisfies a cell selection criterion corresponding to the first-type terminal device according to the cell measurement result of the first cell and a first-cell selection parameter corresponding to the first-type terminal device; wherein a capability of the first-type terminal device is lower than that of a second-type terminal device.

A fourth aspect of the present disclosure provides a network device. The network device includes a sending module. The sending module is configured to send a first-cell selection parameter corresponding to a first-type terminal device to a terminal device to allow the terminal device to determine whether a first cell satisfies a cell selection criterion corresponding to the first-type terminal device according to a cell measurement result of the first cell and the first-cell selection parameter corresponding to the first-type terminal device after obtaining at least one beam measurement value of the first cell and generate the cell measurement result of the first cell according to the at least one beam measurement value of the first cell and a first threshold value of the beam measurement value corresponding to the first-type terminal device. A capability of the first-type terminal device is lower than that of a second-type terminal device.

In some embodiments, the first-type terminal device corresponds to the first-cell selection parameter, the second-type terminal device corresponds to a second-cell selection parameter; and the first-cell selection parameter is different from the second-cell selection parameter.

Provided in the embodiments of the present disclosure are a communication method and apparatus. The method includes: determining whether the first cell satisfies a cell selection criterion corresponding to a first-type terminal device according to the cell measurement result of the first cell and a first-cell selection parameter corresponding to the first-type terminal device. A capability of the first-type terminal device is lower than that of a second-type terminal device. In this way, when a RedCap terminal selects a cell to camp, the first cell-selection parameter corresponding to the RedCap terminal may be configured to determine whether the cell selection criterion corresponding to the RedCap terminal is satisfied, thereby avoiding the problem of the RedCap terminal being unable to find a cell to camp due to decrease of the measurement result of the cell.

## BRIEF DESCRIPTION OF THE DRAWINGS

In order to explain the present disclosure or the technical solutions in the related art more clearly, the drawings needed in the description of the embodiments or the related art will be briefly introduced below. Obviously, the drawings in the following description are some embodiments of the present disclosure. person skilled in the art in the art may also obtain other drawings based on these drawings without exerting creative efforts.

FIG. 1 is a schematic diagram of a communication method according to an embodiment of the present disclosure,

FIG. 2 is a schematic flow chart of a communication method according to an embodiment of the present disclosure;

FIG. 3 is a signaling interaction diagram of a communication method according to an embodiment of the present disclosure;

FIG. 4 is a schematic flow chart of another communication method according to an embodiment of the present disclosure;

FIG. 5 is a schematic flowchart of another communication method according to an embodiment of the present disclosure;

FIG. 6 is a schematic flow chart of another communication method according to an embodiment of the present disclosure;

FIG. 7 is a schematic structural diagram of a communication apparatus according to an embodiment of the present disclosure;

FIG. 8 is a schematic structural diagram of another communication apparatus according to an embodiment of the present disclosure;

FIG. 9 is a schematic structural diagram of an electronic device according to an embodiment of the present disclosure.

## DETAILED DESCRIPTION

In order to make the purpose, technical solutions and advantages of the present disclosure clearer, the technical solutions in the embodiments of the present disclosure will be clearly and completely described below with reference to the accompanying drawings in the embodiments of the present disclosure. Obviously, the described embodiments are some embodiments, but not all embodiments of the present disclosure. Based on the embodiments of the present disclosure, all other embodiments obtained by person skilled in the art in the art without making creative efforts belong to the protection scope of the present disclosure.

The terms "first", "second", etc. in the description, claims, and above-mentioned drawings of the embodiments of the present disclosure are used to distinguish similar objects, and are not necessarily used to describe a specific order or sequence. It is to be understood that data adopted are interchangeable under appropriate circumstances such that the embodiments of the present disclosure described herein may, for example, be practiced in sequences other than those illustrated or described herein. In addition, the terms "including" and "having" and any variations thereof are intended to cover non-exclusive inclusions, e.g., a process, method, system, product, or apparatus that encompasses a series of operations or units and need not be limited to those explicitly listed. Those operations or elements may instead include other operations or elements not expressly listed or inherent to the process, method, product or apparatus.

It should be understood that the terms "system" and "network" are often used interchangeably herein. The term "and/or" in the present disclosure is just an association relationship that describes related objects, indicating that three relationships may exist. For example, A and/or B may mean these three situations: A exists alone, A and B exist simultaneously, and B exists alone. In addition, the character "/" in the present disclosure generally indicates that the related objects are an "or" relationship.

The technical solutions in the embodiments of the present disclosure will be described below with reference to the accompanying drawings in the embodiments of the present disclosure. Obviously, the described embodiments are part of the embodiments of the present disclosure, but not all of the embodiments. Based on the embodiments in the present disclosure, all other embodiments obtained by person skilled in the art without creative efforts fall within the scope of protection of the present disclosure.

Currently, with people's pursuit of speed, low latency, high-speed mobility, energy efficiency, and diversity and complexity of services in future life, the 3rd Generation Partnership Project (3GPPG) has begun to develop 5G. Main application scenarios of 5G include Enhanced Mobile Broadband (eMBB), Ultra Reliable Low Latency Communications (URLLC) and Massive Machine Type Communications (mMTC).

An aim of eMBB is to obtain multimedia content, services and data for a user. Since eMBB may be deployed in different scenarios such as indoors, urban areas, and rural areas, capabilities and needs of eMBB service vary greatly and require detailed analysis based on specific deployment scenarios. Typical applications of URLLC include industrial automation, power automation, and telemedicine operation (Surgery), traffic safety, etc. Typical characteristics of mMTC include high connection density, small data volume, latency-insensitive service, low cost and long service life, etc.

In the related art, in order to support eMBB service, a New Radio (NR) system is designed to satisfy requirements of high speed, high spectrum efficiency, and large bandwidth of eMBB service. NR may be deployed independently. In order to reduce air interface signaling, quickly restore wireless connections and quickly restore data services in the 5G network environment, a new Radio Resource Control (RRC) state, that is, a RRC inactive state, (RRC_INACTIVE) is defined.

The following describes the RRC inactive state, a RRC connected state (RRC_CONNECTED) and a RRC idle state (RRC_IDLE).

The RRC idle state: mobility is based on a cell reselection of a terminal device, paging is initiated by a core network (CN). A paging area is configured by the CN. There is no terminal device access stratum (AS) context on the access network device side. There is no RRC connection.

The RRC connection state: There is an RRC connection, and the terminal device AS context exists on the access network device and the terminal device. The network side knows a location of the terminal device is on a specific cell level. The mobility is network-side controlled mobility. Unicast data may be transmitted between the terminal device and a base station.

The RRC idle state: the mobility is the reselection based on the cell selection of the terminal device. There is a connection between CN and NR. The UEAS context exists on an access network device. Paging is triggered by a Radio Access Network (RAN). A paging area based on the RAN is managed by the RAN. The network side knows the location of the terminal device based on a level of the paging area of the RAN.

In the NR system, when the terminal device is in the idle state or the inactive state, a measurement startup parameter may be obtained through a system broadcast message. Subsequently, the terminal device determines whether to start measurement of cell reselection according to the measurement startup parameter. If the terminal device starts the measurement of the cell reselection, the terminal device measures a neighboring cell, obtains a measurement result of the neighboring cell, and performs cell selection and cell reselection based on the measurement result of the neighboring cell.

The measurement startup of the cell reselection will be described below.

The network device may send the measurement startup parameter to the terminal device through the system broadcast message to constrain a measurement behavior of the terminal device in the idle state or the inactive state. The measurement startup parameter may include intra-frequency measurement startup parameter and/or inter-frequency measurement startup parameter.

Exemplarily, the intra-frequency measurement startup parameter may include $S_{IntraSearchP}$ and $S_{IntraSearchQ}$. The $S_{IntraSearchP}$ is a threshold value of a received power $S_{rxlev}$ in the cell search of the intra-frequency cell. The $S_{IntraSearchQ}$ is a threshold value of a signal quality $S_{qual}$ in the cell search of the intra-frequency cell. For the startup of intra-frequency measurement, do not start the intra-frequency neighboring cell measurement, in response to $S_{rxlev} > S_{IntraSearchP}$ and $S_{qual} > S_{IntraSearchQ}$. Start the intra-frequency neighboring cell measurement, in response to $S_{rxlev} < < S_{IntraSearchP}$ or $S_{qual} < < S_{IntraSearchQ}$.

Exemplarily, the inter-frequency measurement startup parameter may include $S_{nonIntraSearchP}$ and $S_{nonIntraSearchQ}$. $S_{nonIntraSearchP}$ is a threshold value of a received power $S_{rxlev}$ in the cell search of the inter-frequency cell. The $S_{nonIntraSearchQ}$ is a threshold value of a signal quality $S_{qual}$ in the cell search of the inter-frequency cell. For the startup of inter-frequency measurement, do not start the inter-frequency neighboring cell measurement of a same priority or low priority, in response to Srxlev>SnonIntraSearchP and Squal>SnonIntraSearchQ. Start the inter-frequency neighboring cell measurement of the same priority or low priority, in response to $S_{rxlev} < < S_{nonIntraSearchP}$ or $S_{qual} < < S_{nonIntraSearchQ}$.

It should be noted that for high-priority inter-frequency measurement, always start the measurement.

NR measurement is explained below.

In the NR system, a concept of beam-forming is introduced, causing the terminal device to actually measure each beam separately during a Radio Resource Management (RRM) measurement. The terminal device then derives the cell measurement result from the beam measurement result. Exemplarily, the terminal device derives the cell measurement result from the beam measurement result. At the RRC layer, after certain screening of the beam measurement result, only the beam measurement result that satisfy a preset condition may be adopted as a calculation input for the cell measurement result. For example, the preset condition is N best beam measurement results that satisfy a certain threshold. The threshold value may be a parameter absThreshSS-BlocksConsolidation. The terminal device may obtain the threshold value and a maximum number of beams N through network configuration, and take a linear average of the measurement results of the N largest beams that satisfy the threshold value to obtain the cell measurement result. N is an integer greater than or equal to 1.

The following describes NR cell selection and cell reselection.

During the NR cell selection and the cell reselection, after the terminal device determines the cell measurement result, the cell measurement result needs to be ensured to satisfy a cell selection criterion before the terminal device may camp in the cell.

Exemplarily, the cell measurement result includes the received power and the signal quality of the cell. If and only if $S_{rxlev}$ and $S_{qual}$ satisfy a S criterion, the terminal device may camp in the cell. The S criterion includes formula (1)-formula (4):

$$S_{rxlev} > 0 \qquad (1)$$

$$S_{qual} > 0 \qquad (2)$$

$$S_{rxlev} = Q_{rxlevmeas} - (Q_{rxlevmin} + Q_{rxlevminoffset}) - P_{compensation} - Qoffset_{temp} \qquad (3)$$

$$S_{qual} = Q_{qualmeas} - (Q_{qualmin} + Q_{qualminoffset}) - Qoffset_{temp} \qquad (4)$$

$Q_{rxlevmeas}$ is the received power of the cell measured by the terminal device, and $Q_{qualmeas}$ is the signal quality of the cell measured by the terminal device.

$Q_{rxlevmin}$ is a minimum received power required by the network side, and $Q_{qualmin}$ is a minimum signal quality required by the network side.

$Q_{rxlevminoffset}$ and $Q_{qualminoffset}$ are offset amounts for preventing the ping-pong effect caused by radio environment fluctuations between two public land mobile networks (PLMN), which should be considered only when camping on a cell suitable for visiting a PLMN while periodically searching for a PLMN with a higher priority.

$P_{compensation}$ is a power-compensation Exemplarily, $P_{compensation}$ may be the power-compensation caused by low power of the terminal device when a maximum transmission power allowed by the network side is greater than a maximum uplink transmission power determined by the terminal device's own capabilities.

$Q_{offsettemp}$ is a cell-reselection offset value, which is only applicable in special scenarios and is not applicable in normal scenarios. Exemplarily, the "Chiba problem" scenario (a lake is not blocked and a road loss is small, resulting in downlink coverage of the cell being far away, but the uplink transmission power of the terminal device is low, so the uplink and downlink coverage is asymmetric).

It should be noted that the cell reselection may be understood as a process in which the terminal device in the idle state selects a best cell to provide service signals by monitoring the signal quality of neighboring cells and the current cell. When the signal quality and the received power of the neighboring cells satisfy the S criterion and satisfy certain reselection decision criterion (for example, the R criterion), the terminal device will access the cell to camp.

The following describes the amount of receiving antennas of the terminal device.

In the NR technology, the terminal device needs to have a minimum number of receiving antennas (ports), and the minimum number of receiving antennas is related to frequency band. For frequency bands n7, n38, n41, n77, n78, and n79, the minimum number of receiving antennas required by the terminal device is 4, and for all other bands, the minimum number of receiving antennas required by the terminal device is 2. The network device may determine transmission mode of downlink channel according to a requirement for the amount of receiving antennas of the terminal device. Especially in initial access stage, without knowing the amount of receiving antennas of the terminal device, the network device may transmit the downlink channel and signal according to the minimum number of receiving antennas.

In addition to eMBB service, there are also many different service types, such as sensor networks, video surveillance, wearable devices and other services, which have different requirements from eMBB service in terms of speed, bandwidth, power consumption, cost, etc. A terminal, having features of low complexity, low cost, and low capabilities and supporting the above services, has a reduced capability, which is called as Reduced Capability (RedCap), compared to a terminal supporting eMBB service.

In R17, a RedCap terminal is introduced in NR. Currently, there are three main scenarios for the RedCap terminal.

A first scenario is an industrial wireless sensor scenario. Compared with URLLC, the industrial wireless sensor of the RedCap terminal has a relatively low requirement of latency and reliability. Besides, cost and power consumption of the RedCap terminal are also lower than those of URLLC and eMBB.

A second scenario is a video surveillance application scenario. Video surveillance is mainly applied in video surveillance in smart cities, industrial factories, etc. In smart cities, the RedCap terminal collects and processes data to facilitate more effective monitoring and control of urban resources and provide more effective services to urban residents.

A third scenario is a wearable device application scenario. Wearable devices mainly include smart watches, rings, electronic health devices, and some medical monitoring devices, etc.

Compared with eMBB, the RedCap terminal involved in the above three scenarios has the following characteristics. 1. Compared with eMBB, the RedCap terminal has lower equipment cost and complexity (for example, reduced bandwidth and receiving antennas). 2. Compared with eMBB, a device size of the RedCap terminal is smaller. 3. Compared with eMBB, the RedCap terminal requires compensation to achieve coverage comparable to eMBB due to a coverage loss caused by reduced receiving antennas, reduced bandwidth, lowered power levels, or other complexity reductions in the terminal device.

In the related art, due to the reduction in the amount of receiving antennas or the reduction in antenna gain, the measurement result of the cell by the RedCap terminal will decrease compared with that of the non-RedCap terminal, which in turn causes the RedCap terminal to decide whether to camp in the cell based on a threshold of the non-RedCap terminal. As a result, the RedCap terminal may be unable to find a cell to camp, thereby affecting the cell coverage of a RedCap terminal type and causing service interruption.

In order to solve the above problem, embodiments of the present disclosure provide a communication method and an apparatus. Whether a first cell satisfies a cell selection criterion corresponding to the RedCap terminal is determined through a first-cell selection parameter corresponding to the RedCap terminal, thereby reducing the possibility that the RedCap terminal is unable to find a cell to camp due to a reduction of the measurement result, thus ensuring cell coverage of a terminal belonging to the RedCap terminal type.

The application scenarios of the present disclosure are illustrated below with examples.

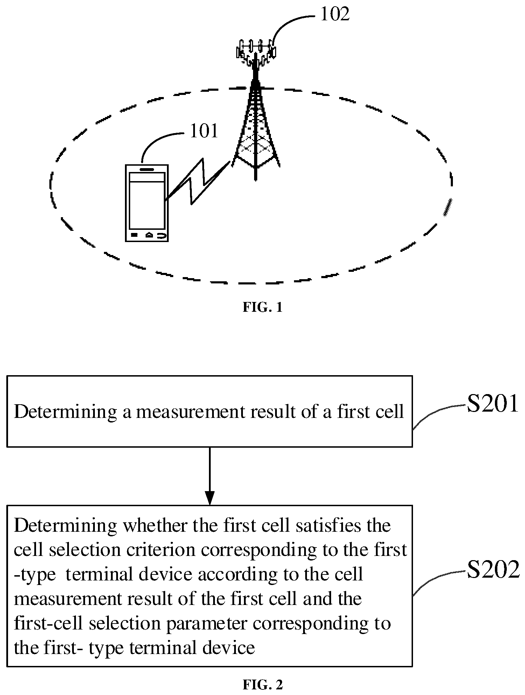

FIG. 1 is a schematic diagram of a communication method according to an embodiment of the present disclosure. As shown in FIG. 1, a terminal device 101 is a RedCap terminal. When the terminal device 101 starts a neighboring cell measurement, a measurement result of the neighboring cell may be determined first. Subsequently, the terminal device 101 determines whether the measured neighboring cell satisfies a cell selection criterion corresponding to the RedCap terminal based on the measurement result of the neighboring cell and a first-cell selection parameter corresponding to the RedCap terminal. If it is determined that the measured neighboring cell satisfies the cell selection criterion corresponding to the RedCap terminal, the terminal device 101 camps in the measured neighboring cell. The first-cell selection parameter corresponding to the RedCap terminal may be sent by a network device 102 to the terminal device 101, or may be determined by the terminal device 101 based on a second-cell selection parameter and a first correction value corresponding to an enhanced mobile broadband terminal.

The mobile terminal 101 is the RedCap terminal. Examples may include, but are not limited to, a satellite or cellular telephone, a Personal Communications System (PCS) terminal that may combine a cellular radiotelephone with data processing, a fax, and data communication capability, a PDA with a radiotelephone, a pager, an Internet/intranet access, a Web browser, a planner, a calendar, and/or a Global Positioning System (GPS) receiver; and a conventional laptop and/or a handheld receiver or other electronic devices including radiotelephone transceivers. The terminal device may refer to an access terminal, a user equipment (UE), an user unit, an user station, a mobile station, a mobile station, a remote station, a remote terminal, a mobile device, an user terminal, a terminal, a wireless communication equipment, an user agent or an user device. The access terminal may be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, a vehicle-mounted device, a wearable device, a terminal device in a 5G network or a terminal device in a future evolved PLMN, etc.

The network device 102 may provide communication coverage for a specific geographic area and may communicate with terminal devices located within the coverage area. Optionally, the network device 102 may be a base transceiver station (BTS) in a GSM system or CDMA system, a NodeB (NB) in a WCDMA system, or an evolutional Node B (eNB or eNodeB) in an LTE system, or a wireless controller in a Cloud Radio Access Network (CRAN). Alternatively, the network device may be a network device in a mobile switching center, a relay station, an access point, a vehicle-mounted equipment, a wearable device, a hub, a switch, a bridge, a router, a network device in 5G network, or may be a network device in a future evolved Public Land Mobile Network (PLMN), etc.

The terminal device and the network device in some specific embodiments are taken as examples to describe in detail the technical solutions in the embodiments of the present disclosure. The following specific embodiments may be combined with each other, and the same or similar concepts or processes may not be described again in some embodiments.

FIG. 2 is a schematic flowchart of a communication method according to an embodiment of the present disclosure. An execution subject of the embodiments of the present disclosure is a first-type terminal device, and involves a process of how the first-type terminal device determines whether a measured first cell satisfies a cell selection criterion corresponding to the first-type terminal device. As shown in FIG. 2, the method includes the following operations.

At S201, determining a measurement result of a first cell.

In the present disclosure, after initiating a neighboring cell measurement, the first-type terminal device may measure the neighboring first cell and then determine the measurement result of the neighboring first cell.

The cell measurement result of the first cell includes a received power of the first cell and a signal quality of the first cell.

It should be understood that a capability of the first-type terminal device involved in the embodiments of the present disclosure is lower than a capability of a second-type terminal device. Exemplarily, the first-type terminal device may be a RedCap terminal, and the second-type terminal device may be an enhanced mobile broadband terminal. It should be understood that the first cell involved in the embodiments of the present disclosure may be any neighboring cell where the first-type terminal device currently camps.

It should be noted that the embodiments of the present disclosure do not limit how to determine the measurement result of the first cell. In some embodiments, each beam of the first cell may be measured separately to obtain at least one beam measurement value of the first cell. Subsequently, the first-type terminal device generates the measurement result of the first cell based on at least one beam measurement value of the first cell and a first threshold value of the beam measurement value corresponding to the first-type terminal device.

In the present disclosure, the first threshold value is configured to filter the at least one beam measurement value of the first cell and remove beam measurement values that do not satisfy a condition. In some other embodiments, in addition to filtering by using the first threshold value, the beam measurement value may also be filtered based on an available number of beam measurement values. Exemplarily, the available number of beam measurement values may be set to N, and then N largest beam measurement results are selected from the at least one beam measurement value and linearly averaged to obtain the measurement result of the first cell.

It should be understood that in the embodiments of the present disclosure, due to a reduction in the amount of receiving antennas and a reduction in antenna gain of the first-type terminal device compared to the second-type terminal device, reception performance of a Single Side Band (SSB) beam will decrease, such that the beam measurement value of the first cell obtained by the first-type terminal device is lower than that of the second-type terminal device. Therefore, in the embodiments of the present disclosure, when determining the measurement result of the first cell, the first-type terminal device may adopt the first threshold value of the beam measurement value corresponding to the first-type terminal device instead of adopting the second threshold value of the beam measurement value corresponding to the second-type terminal device.

It should be noted that the embodiments of the present disclosure do not limit how to determine the first threshold value of the beam measurement value corresponding to the first-type terminal device. In some embodiments, the first threshold is configured by the network device. Exemplarily, the network device configures a separate set of first threshold value (absThreshSS-BlocksConsolidationRedCap) for filtering a SSB measurement result for the first-type terminal device. The first threshold value is smaller than the second threshold value (absThreshSS-BlocksConsolidationRedCap) for the common second-type terminal device to select SSB.

It should be understood that the embodiments of the present disclosure do not limit how to send the first threshold value, by the network device, to the first-type terminal device. In some embodiments, the first threshold value may be carried in a broadcast message of a System Information Type (SIB), such as, SIB2 or SIB4. Alternatively, the first threshold value may be carried in a broadcast message of a Master Information Block (MIB).

In some other embodiments, the first threshold value may also be determined based on the second threshold value of the beam measurement value corresponding to the second-type terminal device and a second correction value. The second correction value may be a preset value. Exemplarily, if the second correction value is preset to 3dB, the first-type terminal device may subtract 3dB from the second threshold value (absThreshSS-BlocksConsolidation) of the beam measurement value corresponding to the second-type terminal device, thereby obtaining the first threshold value of the beam measurement value corresponding to the first-type terminal device. The embodiments of the present disclosure do not limit the second correction value, which may be specifically set according to an actual situation of the first-type terminal device.

At S202, determining whether the first cell satisfies the cell selection criterion corresponding to the first-type terminal device according to the cell measurement result of the first cell and the first-cell selection parameter corresponding to the first-type terminal device.

In this operation, after the first-type terminal device determines the measurement result of the first cell, whether the first cell satisfies the cell selection criterion corresponding to the first-type terminal device may be determined based on the cell measurement result of the first cell and the first-cell selection parameter corresponding to the first-type terminal device.

The first-type terminal device corresponds to the first-cell selection parameter, and the second-type terminal device corresponds to the second-cell selection parameter. The first-cell selection parameter is different from the second-cell selection parameter.

The first-cell selection parameter is specifically configured for intra-frequency and/or inter-frequency cell reselection of the first-type terminal device. The first-cell selection parameter includes at least one of the following: a threshold value of a received power, a threshold value of signal quality, an offset amount for preventing the ping-pong effect caused by radio environment fluctuations, a power-compensation value and a cell-reselection offset value.

It should be understood that due to a smaller antenna gain of the first-type terminal device, the second-cell selection parameter applicable to the second-type terminal device is not applicable to the first-type terminal device. Therefore, in the embodiments of the present disclosure, when the first-type terminal device performs cell selection, the first-cell selection parameter corresponding to the first-type terminal device may be adopted. The first-cell selection parameter is lower than the second-cell selection parameter.

It should be noted that the embodiments of the present disclosure do not limit how to determine the first-cell selection parameter. In some embodiments, the first-cell selection parameter is configured by the network device. Exemplarily, the first-cell selection parameter is carried in a broadcast message of SIB (for example, SIB1), or may also be carried in a broadcast message of MIB, which are not limited in the embodiments of the present disclosure.

In some other embodiments, the first-cell selection parameter is determined based on the second-cell selection parameter and the first correction value corresponding to the second-type terminal device. The first correction value is configured to correct the threshold value of the received power and the threshold value of the signal quality of the second-cell selection parameter. The first correction value is calculated and determined based on the amount of receiving antennas and antenna gains of the first-type terminal device. Exemplarily, the first-type terminal device may perform calculations based on its own number of receiving antennas, antenna gain, etc., to obtain a new threshold value of the received power and a new threshold value of the signal quality. Subsequently, the first correction value is predefined based on the threshold value of the received power and the threshold value of the signal quality. Exemplarily, for a frequency band in NR where the minimum number of receiving antennas supported is 2, and the amount of receiving antennas supported by the first-type terminal device is 1, then the first-type terminal device determines the first correction value to be 3dB.

It should be understood that the parameter configured for the inter-frequency cell reselection in SIB4 includes the cell selection criterion (S criterion) of the second-type terminal device. For the first-type terminal device, a separate set of cell selection criterion corresponding to the first type terminal may be introduced. Subsequently, the first-type terminal device adopts the first-cell selection parameter corresponding to the first-type terminal device to determine whether the first cell satisfies the cell selection criterion corresponding to the first-type terminal device. In other words, for the first-type terminal device with 1RX capability, its corresponding cell selection parameter and cell selection criterion are adopted.

The embodiments of the present disclosure do not limit how to determine whether the first cell satisfies the cell selection criterion corresponding to the first-type terminal device. In some embodiments, if the received power of the first cell is greater than the first threshold and the signal quality of the first cell is greater than the second threshold, it is determined that the first cell satisfies the cell selection criterion corresponding to the first-type terminal device. If the received power of the first cell is less than or equal to the first threshold, or the signal quality of the first cell is less than or equal to the second threshold, it is determined that the first cell does not satisfy the cell selection criterion corresponding to the first-type terminal device.

Exemplarily, the cell selection criterion corresponding to the first-type terminal device include formula (5)-formula (8).

$$S_{rxlev} > 0 \qquad (5)$$

$$S_{qual} > 0 \qquad (6)$$

$$S_{rxlev} = Q_{rxlevmeas} - (Q_{rxlevminredcap} + Q_{rxlevminoffset}) - P_{compensation} - Qoffset_{temp} \qquad (7)$$

$$S_{qual} = Q_{qualmeas} - (Q_{qualminredcap} + Q_{qualminoffset}) - Qoffset_{temp} \qquad (8)$$

$S_{rxlev}$ is the received power in cell search, and $S_{qual}$ is the signal quality in cell search. $Q_{rxlevmeas}$ is the measured received power of the cell, and $Q_{qualmeas}$ is the measured signal quality of the cell. $Q_{rxlevmintedcap}$ is a minimum received power corresponding to the first-type terminal device required by the network side, and $Q_{qualmintedcap}$ is a minimum signal quality corresponding to the first-type terminal device required by the network side.

$Q_{rxlevminoffset}$ and $Q_{qualminoffset}$ are offset amounts for preventing the ping-pong effect caused by radio environment fluctuations between two public land mobile networks (PLMN), which should be considered only when camping on a cell suitable for visiting a PLMN while periodically searching for a PLMN with a higher priority.

$P_{compensation}$ is a power-compensation Exemplarily, $P_{compensation}$ may be the power-compensation caused by low power of the terminal device when a maximum transmission power allowed by the network is greater than a maximum uplink transmission power determined by the terminal device's own capability.

$Q_{offsettemp}$ is a cell-reselection offset value, which is only applicable in special scenarios and is not applicable in normal situations. Exemplarily, the "Chiba problem" scenario (a lake is not blocked and a road loss is small, resulting in a downlink coverage of the cell being far away, but an uplink transmission power of the terminal device is low, so the uplink and downlink coverage is asymmetric).

The first-cell selection parameter corresponding to the first-type terminal device is lower than the second-cell selection parameter corresponding to the second-type terminal device. Exemplarily, $Q_{rxlevminredcap} < Q_{rxlevmin}$, $Q_{qualminredcap} < Q_{qualmin}$.

The communication method according to the embodiments of the present disclosure first determines the measurement result of the first cell, and then determines whether the first cell satisfies the cell selection criterion corresponding to the first-type terminal device based on the cell measurement result of the first cell and the first-cell selection parameter corresponding to the first-type terminal device. The capability of the first-type terminal device is lower than the capability of the second-type terminal device. In this way, when the RedCap terminal selects a cell to camp, the first-cell selection parameter corresponding to the RedCap terminal may be adopted to determine whether the cell selection criterion corresponding to the RedCap terminal is met, thereby reducing the possibility that the RedCap terminal is not able to find a cell to camp caused by the reduction of the measurement result of the cell.

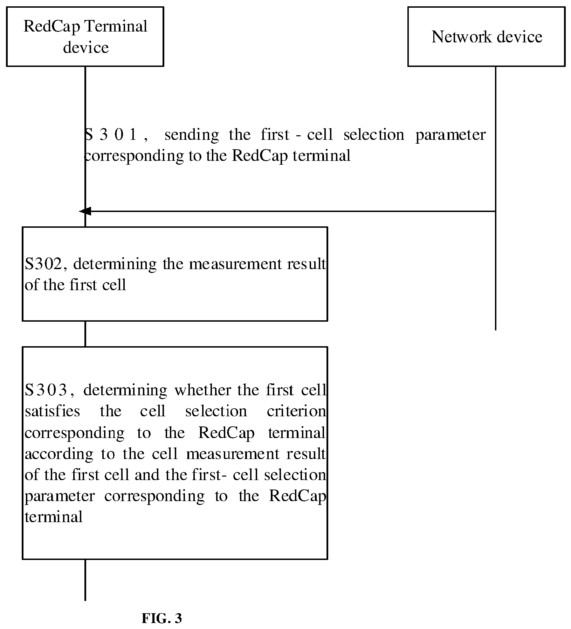

Based on the above embodiments, the method for determining the first-cell selection parameter will be described below. FIG. 3 is a signaling interaction diagram of a communication method according to an embodiment of the present disclosure. As shown in FIG. 3, the method includes the following operations.

At S301, sending, by the network device, the first-cell selection parameter corresponding to the RedCap terminal to the RedCap terminal. The capability of the RedCap terminal is lower than that of an enhanced mobile broadband terminal.

The first-cell selection parameter is specifically configured for intra-frequency and/or inter-frequency cell reselection of the RedCap terminal. The first-cell selection parameter includes at least one of the following: a threshold value of a received power, a threshold value of a signal quality, an offset amount for preventing the ping-pong effect caused by radio environment fluctuations, a power-compensation value, and a cell-reselection offset value.

In some embodiments, the first-cell selection parameter is carried in a broadcast message of the SIB.

At S302, determining, by the RedCap terminal, the measurement result of the first cell.

The cell measurement result of the first cell includes the received power of the first cell and the signal quality of the first cell.

At S303, determining, by the RedCap terminal, whether the first cell satisfies the cell selection criterion corresponding to the RedCap terminal according to the cell measurement result of the first cell and the first-cell selection parameter corresponding to the RedCap terminal.

The technical terms, technical effects, technical features, and optional implementation methods of S301-S303 may be understood with reference to S201-S202 shown in FIG. 2, the repeated content of which will not be repeated here.

In the present embodiment, by adding the first-cell selection parameter corresponding to the RedCap terminal in the SIB facilitates the RedCap terminal to evaluate the cell based on the measurement result of the lower reference signal received power during the cell selection, and reducing the possibility of being unable to camp in a cell caused by adopting the original parameter value, thus reducing the possibility of service interruption.

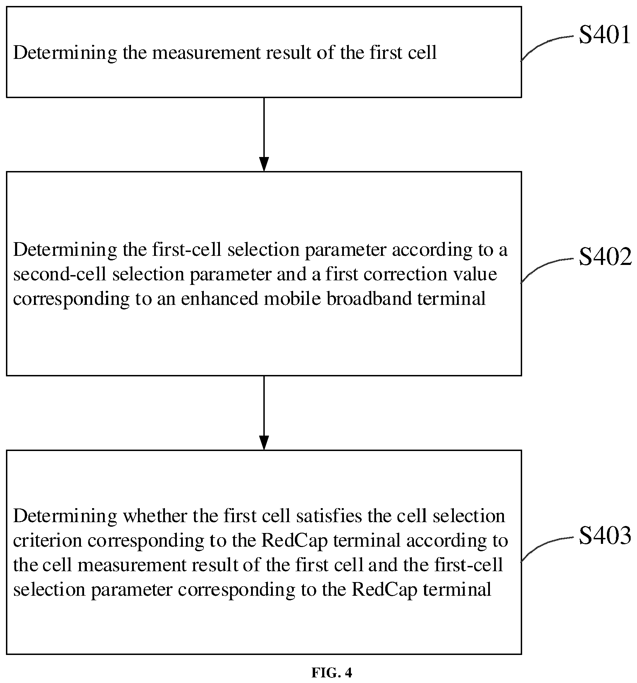

Based on the above embodiments, another method for determining the first-cell selection parameter is provided below. FIG. 4 is a schematic flowchart of another communication method according to an embodiment of the present disclosure. As shown in FIG. 4, the method includes the following operations.

At S401, determining the measurement result of the first cell.

The measurement result of the first cell includes a received power of the first cell and a signal quality of the first cell.

At S402: determining the first-cell selection parameter according to a second-cell selection parameter and a first correction value corresponding to an enhanced mobile broadband terminal.

The second-cell selection parameter is specifically configured to enhance intra-frequency and/or inter-frequency cell reselection of the mobile broadband terminal. The first-cell selection parameter is specifically configured to enhance the intra-frequency and/or inter-frequency cell reselection of the RedCap terminal. The first-cell selection parameter includes at least one of the following: a threshold value of received power, a threshold value of a signal quality, an offset amount for preventing the ping-pong effect caused by radio environment fluctuations, a power-compensation value, and a cell-reselection offset value.

At S403, determining whether the first cell satisfies the cell selection criterion corresponding to the RedCap terminal according to the cell measurement result of the first cell and the first-cell selection parameter corresponding to the RedCap terminal.

The technical terms, technical effects, technical features, and optional implementation methods of S401-S403 may be understood with reference to S201-S202 shown in FIG. 2, the repeated content of which will not be repeated here.

In the present embodiment, antenna gains of the RedCap terminal is considered on the basis of the existing second-cell selection parameter, thereby the cell selection parameter is adjusted, which helps the RedCap terminal to evaluate the cell when performing cell selection according to the measurement result of the lower reference signal received power. Therefore, it reduces the possibility of being unable to camp in a cell due to adopting the original second-cell selection parameter, and reduces the possibility of service interruption. Readopting the existing second-cell selection parameter is also beneficial to reducing broadcast signaling overhead.

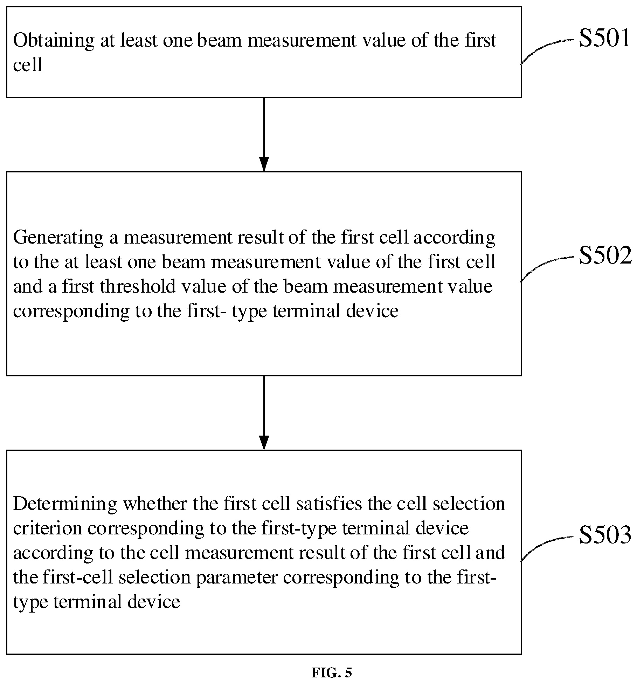

Based on the above embodiments, the cell measurement involved in the present disclosure will be described below. FIG. 5 is a schematic flowchart of another communication method according to an embodiment of the present disclosure. As shown in FIG. 5, the method includes the following operations.

At S501, obtaining at least one beam measurement value of the first cell.

At S502, generating a measurement result of the first cell according to the at least one beam measurement value of the first cell and a first threshold value of the beam measurement value corresponding to the first-type terminal device.

In some embodiments, the first threshold is configured by the network device. The embodiments of the present disclosure do not limit how to send the first threshold value to the first-type terminal device by the network device. Exemplarily, the first threshold value may be carried in a SIB broadcast message, such as SIB2 or SIB4. Exemplarily, the first threshold value may be carried in a broadcast message of a master information block (MIB).

In some other embodiments, the first threshold value may also be determined based on a second threshold value of the beam measurement value corresponding to the second-type terminal device and a second correction value. Exemplarily, if the second correction value is preset to 3dB, the first-type terminal device may subtract 3dB from the second threshold value of the beam measurement value corresponding to the second-type terminal device, thereby obtaining the first threshold value of the beam measurement value corresponding to the type of terminal device.

At S503, determining whether the first cell satisfies the cell selection criterion corresponding to the first-type terminal device according to the cell measurement result of the first cell and the first-cell selection parameter corresponding to the first-type terminal device. The capability of the first-type terminal device is lower than that of the second-type terminal device.

The first-type terminal device corresponds to the first-cell selection parameter, and the second-type terminal device corresponds to the second-cell selection parameter. The first-cell selection parameter and the second-cell selection parameter are different.

The technical terms, technical effects, technical features, and optional implementation methods of S501-S503 may be understood with reference to S201-S202 shown in FIG. 2, the repeated content of which will not be repeated here.

In the embodiments of the present disclosure, the unique first threshold value of the SSB measurement result of the first-type terminal device is configured, or antenna gains of the first-type terminal device is considered based on the existing second threshold value, so as to adjust the second threshold value of the SSB measurement result to obtain the first threshold value. In this way, it helps a terminal with low-capability to find a lower-quality SSB measurement result when performing cell selection, and generate the cell measurement result, which facilitate subsequent cell selection and reselection operation.

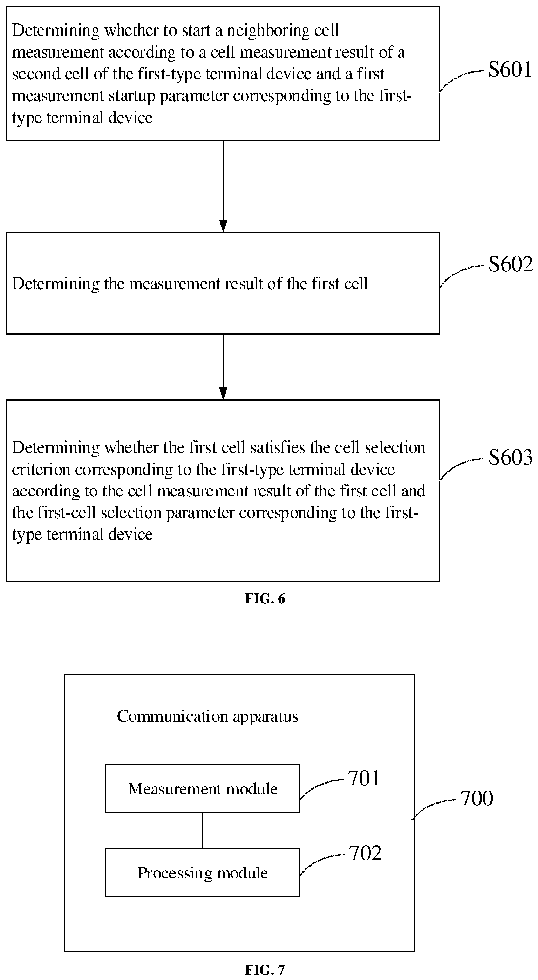

Based on the above embodiments, a neighboring cell measurement startup involved in the present disclosure will be described below. FIG. 6 is a schematic flowchart of another communication method according to an embodiment of the present disclosure. As shown in FIG. 6, the method includes the following operations.

At S601, determining whether to start a neighboring cell measurement according to a cell measurement result of a second cell of the first-type terminal device and a first measurement startup parameter corresponding to the first-type terminal device. The second cell is a cell camped by the first-type terminal device before the first-type terminal device reselects the first cell.

In the present disclosure, due to the reduction in the amount of receiving antennas and the reduction of antenna gains of the first-type terminal device, reception performance for SSB will be reduced, resulting in a reference signal received power obtained by the measurement of SSB by the first-type terminal device is lower than that of the second-type terminal device. If the first-type terminal device adopts the second measurement startup parameter corresponding to the second-type terminal device, the neighboring cell measurement may not be able to be started in time.

Based on this, the first-type terminal device may adopt the first measurement startup parameter corresponding to the first-type terminal device instead of the second measurement startup parameter corresponding to the second-type terminal device, to determine whether to start the neighboring cell measurement.

The embodiments of the present disclosure do not limit how to determine the first measurement startup parameter. In some embodiments, the first measurement startup parameter is configured by the network device and sent to the terminal device by the network device. In some other embodiments, the first measurement startup parameter is determined based on the second measurement startup parameter corresponding to the second-type terminal device and a third correction value. The first measurement startup parameter is obtained by reducing the third correction value based on the second measurement startup parameter. The third correction value may be specifically set according to the actual situation, such as 3dB.

The first measurement startup parameter includes an intra-frequency measurement startup parameter and/or an inter-frequency measurement startup parameter. The intra-frequency measurement startup parameter is configured to determine whether to start or stop the intra-frequency neighboring cell measurement by the terminal device. The inter-frequency measurement startup parameter is configured to determine whether to start or stop the inter-frequency neighboring cell measurement by the terminal device.

It should be understood that the embodiments of the present disclosure do not limit how to determine whether to start the neighboring cell measurement. In some embodiments, the determination may be made by comparing the cell measurement result of the second cell with the first measurement startup parameter.

Exemplarily, the intra-frequency measurement startup parameter of the first measurement startup parameter may include $S_{IntraSearchPRedCap}$ and $S_{IntraSearchQRedCap}$. $S_{IntraSearchPRedCap}$ is a threshold value of a received power $S_{rxlev}$ in a cell search of an intra-frequency cell. $S_{IntraSearchQRedCap}$ is a threshold value of a signal quality $S_{qual}$ in the cell search of the intra-frequency cell. For the startup of intra-frequency measurement, do not start the intra-frequency neighboring cell measurement, in response to $S_{rxlev} > S_{IntraSearchPRedCap}$ and $S_{qual} > S_{IntraSearchQRedCap}$. Start intra-frequency neighboring cell measurement, in response to $S_{rxlev} < S_{IntraSearchPRedCap}$ or $S_{qual} < S_{IntraSearchQRedCap}$.

Exemplarily, the inter-frequency measurement startup parameter of the first measurement startup parameter may include $S_{nonIntraSearchPRedCap}$ and $S_{nonIntraSearchQRedCap}$. $S_{nonIntraSearchPRedCap}$ is a threshold value of a received power $S_{rxlev}$ in the cell search of the inter-frequency cell, and $S_{nonIntraSearchQRedCap}$ is the threshold value of the signal quality $S_{qual}$ in the cell search of the inter-frequency cell. For the startup of inter-frequency measurement, do not start inter-frequency neighboring cell measurement with the same priority or low priority, in response to $S_{rxlev} > S_{nonIntraSearchPRedCap}$ and $S_{qual} > S_{nonIntraSearchQRedCap}$. Start inter-frequency neighboring cell measurement with the same priority or low priority, in response to $S_{rxlev} < < S_{nonIntraSearchPRedCap}$ or $S_{qual} < < S_{nonIntraSearchQRedCap}$.

Exemplarily, for the inter-frequency measurement with a high priority, always start its measurement.

It should be noted that the embodiments of the present disclosure do not limit when to send the first measurement startup parameter to the terminal device by the network device. In some embodiments, the network device may first send the first threshold value of the beam measurement value corresponding to the first-type terminal device, and then send the first measurement startup parameter. In some other embodiments, the network device may simultaneously send the first threshold value and the first measurement startup parameter of the beam measurement value corresponding to the first-type terminal device.

At S602: determining the measurement result of the first cell.

At S603: determining whether the first cell satisfies the cell selection criterion corresponding to the first-type terminal device according to the cell measurement result of the first cell and the first-cell selection parameter corresponding to the first-type terminal device. The capability of the first-type terminal device is lower than that of the second-type terminal device.

The technical terms, technical effects, technical features, and optional implementation methods of S601-S603 may be understood with reference to S201-S202 shown in FIG. 2, the repeated content of which will not be repeated here.

In the present embodiment, by adopting the first measurement startup parameter corresponding to the first-type terminal device, it is possible to avoid the first-type terminal device from starting the neighboring cell measurement too late, thereby avoiding the cell reselection being performed too late and ensuring service transmission to be proceeded normally.

A person skilled in the art may understand that all or part of the operations to implement the above method embodiments may be completed through hardware related to program information. The aforementioned program may be stored in a computer-readable storage medium. When the program is executed, the operations in the above method embodiments are performed. The aforementioned storage medium includes: ROM, RAM, magnetic disk or optical disk and other various media that may store program codes.

FIG. 7 is a schematic structural diagram of a communication apparatus according to an embodiment of the present disclosure. The communication apparatus may be implemented by software, hardware, or a combination of both, to execute the communication method on the terminal device side in the above embodiments. As shown in FIG. 7, the communication apparatus 700 includes a measurement module 701 and a processing module 702.

The measurement module 701 is configured to determine a measurement result of a first cell.

The processing module 702 is configured to determine whether the first cell satisfies a cell selection criterion corresponding to a first-type terminal device according to the cell measurement result of the first cell and the first-cell selection parameter corresponding to the first-type terminal device. A capability of the terminal device is lower than that of a second-type terminal device.

In an optional implementation, the first-type terminal device corresponds to the first-cell selection parameter, and the second-type terminal device corresponds to the second-cell selection parameter. The first-cell selection parameter and the second-cell selection parameter are different.

In an optional implementation, the first-cell selection parameter includes at least one of the following: a threshold value of a received power, a threshold value of a signal quality, an offset amount for preventing the ping-pong effect caused by radio environment fluctuations, and a power-compensation value and a cell-reselection offset value.

In an optional implementation, the first-cell selection parameter is determined based on the second-cell selection parameter and the first correction value corresponding to the second-type terminal device.

In an optional implementation manner, the first correction value is configured to correct the threshold value of the received power and the threshold value of the signal quality of the second-cell selection parameter.

In an optional implementation, the first correction value is calculated and determined based on an amount of receiving antennas and antenna gains of the first-type terminal device.

In an optional implementation manner, the first-cell selection parameter is configured by the network device.

In an optional implementation manner, the first-cell selection parameter is carried in a broadcast message of a system information block.

In an optional implementation, the first-cell selection parameter is specifically configured for intra-frequency and/or inter-frequency cell reselection of the first-type terminal device.

In an optional implementation, the cell measurement result of the first cell includes the received power of the first cell and the signal quality of the first cell.

In an optional implementation, the processing module 702 is specifically configured to determine that the first cell satisfies the cell selection criterion corresponding to the first-type terminal device, in response to the received power of the first cell being greater than the first threshold and the signal quality of the first cell being greater than the second threshold.

In an optional implementation, the processing module 702 is specifically configured to determine that the first cell does not satisfies the cell selection criterion corresponding to the first-type terminal device, in response to the received power of the first cell being less than or equal to the first threshold, or the signal quality of the first cell being less than or equal to the second threshold.

In an optional implementation, the measurement module 701 is specifically configured to obtain at least one beam measurement value of the first cell; generate the measurement result of the first cell according to the at least one beam measurement value of the first cell and the first threshold value of the beam measurement value corresponding to the first-type terminal device.

In an optional implementation, the first threshold value is determined based on the second threshold value of the beam measurement value corresponding to the second-type terminal device and a second correction value.

In an optional implementation manner, the first threshold value is configured by the network device.

In an optional implementation manner, the first threshold value is carried in a broadcast message of a system information block.

In an optional implementation, the processing module 702 is further configured to determine whether to start a neighboring cell measurement according to the cell measurement result of the second cell of the first-type terminal device and the first measurement startup parameter corresponding to the first-type terminal device. The second cell is a cell camped by the first cell before the first-type terminal device reselects the first cell.

In an optional implementation, the first measurement startup parameter is determined according to the second measurement startup parameter corresponding to the second-type terminal device and a third correction value.

In an optional implementation manner, the first measurement startup parameter is configured by the network device.

In an optional implementation, the first measurement startup parameter includes an intra-frequency measurement startup parameter and/or an inter-frequency measurement startup parameter. The intra-frequency measurement startup parameter configured to determine whether to start or stop intra-frequency neighboring cell measurement by the terminal device. The inter-frequency measurement startup parameter is configured to determine whether to start or stop inter-frequency neighboring cell measurement by the terminal device.

The communication apparatus according to the embodiments of the present disclosure may perform the communication methods on the terminal device side in the above embodiments. Its implementation principles and technical effects are similar and will not be described again here.

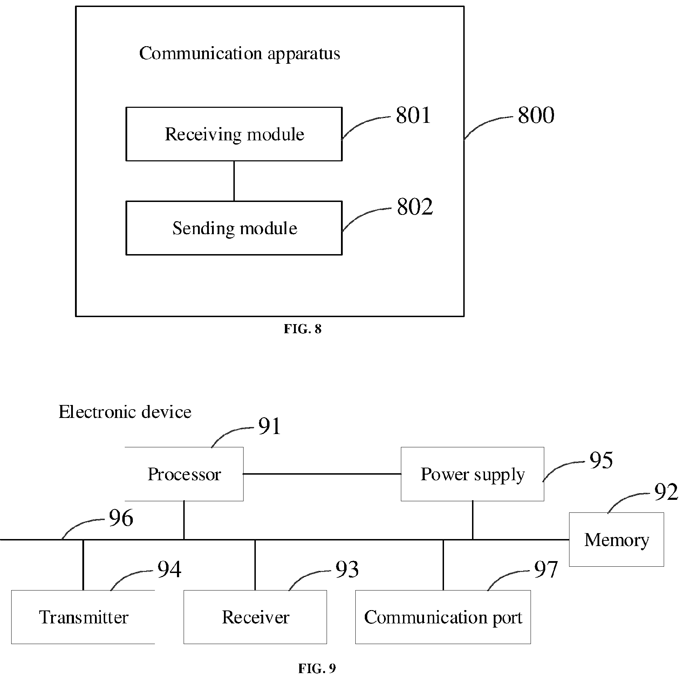

FIG. 8 is a schematic structural diagram of another communication apparatus according to an embodiment of the present disclosure. The communication apparatus may be implemented by software, hardware, or a combination of both, to execute the communication methods on the network device side in the above embodiments. As shown in FIG. 8, the communication apparatus 800 includes a receiving module 801 and a sending module 802.

The receiving module 801 is configured to receive a message sent by a terminal device.

The sending module 802 is configured to send a first-cell selection parameter corresponding to a first-type terminal device to the terminal device. The first-cell selection parameter is configured to determine whether the first cell satisfies a cell selection criterion corresponding to the first-type terminal device. A capability of the first-type terminal device is lower than that of a second-type terminal device.

In an optional implementation, the first-type terminal device corresponds to the first-cell selection parameter, and the second-type terminal device corresponds to the second-cell selection parameter. The first-cell selection parameter and the second-cell selection parameter are different.

In an optional implementation, the first-cell selection parameter includes at least one of the following: a threshold value of a received power, a threshold value of a signal quality, an offset amount for preventing the ping-pong effect caused by radio environment fluctuations, and a power-compensation value. and a cell-reselection offset value.

In an optional implementation manner, the first-cell selection parameter is carried in a broadcast message of a system information block.

In an optional implementation, the first-cell selection parameter is specifically configured for intra-frequency and/or inter-frequency cell reselection for the first-type terminal device.

In an optional implementation, the cell measurement result of the first cell includes the received power of the first cell and the signal quality of the first cell.

In an optional implementation, the sending module is further configured to send a first threshold value of the beam measurement value corresponding to the first-type terminal device to the terminal device. The first threshold value is configured to determine the measurement result of the first cell.

In an optional implementation manner, the first threshold value is carried in the broadcast message of the system information block.

In an optional implementation, the sending module is further configured to send a first measurement startup parameter corresponding to the first-type terminal device to the terminal device. The first measurement startup parameter is configured to determine whether to start a neighboring cell measurement.

In an optional implementation, the first measurement startup parameter includes an intra-frequency measurement startup parameter and/or an inter-frequency measurement startup parameter. The intra-frequency measurement startup parameter is configured to determine whether to start or stop intra-frequency neighboring cell measurement by the terminal device. The inter-frequency measurement startup parameter is configured to determine whether to start or stop the inter-frequency neighboring cell measurement by the terminal device.

The communication apparatus according to the embodiments of the present disclosure may perform the operations of the communication methods on the network device side in the above embodiments. Its implementation principles and technical effects are similar and will not be described again here.

FIG. 9 is a schematic structural diagram of an electronic device according to an embodiment of the present disclosure. As shown in FIG. 9, the electronic device may include a processor 91 (such as a CPU), a memory 92, a receiver 93 and a transmitter 94. The receiver 93 and the transmitter 94 are coupled to the processor 91. The processor 91 controls a receiving action of the receiver 93. The processor 91 controls a sending action of the transmitter 94. The memory 92 may include a high-speed RAM memory, and may also include a non-volatile memory NVM, such as at least one disk memory. Various information may be stored in the memory 92 to complete various processing functions and implement the methods of the embodiments of the present disclosure. Optionally, the electronic device involved in the embodiments of the present disclosure may also include a power supply 95, a communication bus 96 and a communication port 99. The receiver 93 and the transmitter 94 may be integrated in a transceiver of the electronic device, or they may be independent transceiver antennas on the electronic device. The communication bus 96 is configured to implement communication connections between various components. The above-mentioned communication port 99 is configured to realize connection and communication between the electronic device and other peripheral devices.

In the embodiments of the present disclosure, the above-mentioned memory 92 is configured to store a computer executable program code. The program code includes information. When the processor 91 executes the information, the information causes the processor 91 to perform the processing operations on the terminal device side in the above method embodiments; cause the transmitter 94 to perform the sending action on the terminal device side in the above method embodiments, and cause the receiver 93 to perform the receiving action on the terminal device side in the above method embodiments. The implementation principles and technical effects are similar and will not be described again here.

Alternatively, when the processor 91 executes the information, the information causes the processor 91 to perform the processing action on the network device side in the above method embodiments, causes the transmitter 94 to perform the sending action on the network device side in the above method embodiments, and causes the receiver 93 to perform the receiving action on the network device side in the above method embodiments. The implementation principles and technical effects are similar and will not be described again here.

The embodiments of the present disclosure also provide a communication system. The communication system includes a terminal device and a network device, to perform the above communication methods.

The embodiments of the present disclosure also provide a chip. The chip includes a processor and an interface. The interface is configured to input and output data or instructions processed by the processor. The processor is configured to execute the methods provided in the above method embodiments. The chip may be used in the terminal device or the network device.

The present disclosure also provides a computer-readable storage medium. The computer-readable storage medium may include a U disk, a mobile hard disk, a read-only memory (ROM, Read-Only Memory), a random access memory (RAM), a magnetic disk or an optical disk and other media that may store program codes. Specifically, the computer-readable storage medium stores program information, and the program information is used in the above communication methods.

The embodiments of the present disclosure also provide a program. The program, when executed by a processor, is configured to perform the communication methods according to the above method embodiments.

The embodiments of the present disclosure also provide a program product, such as a computer-readable storage medium. An instruction is stored in the program product. When the instruction is run on a computer, it causes the computer to execute the communication methods according to the above method embodiments.

The above embodiments may be implemented in whole or in part by software, hardware, firmware, or any combination thereof. When implemented by software, they may be implemented in whole or in part in the form of a computer program product. The computer program product includes one or more computer instructions. When the computer program instructions are loaded and executed on a computer, processes or functions according to embodiments of the disclosure are produced in whole or in part. The computer may be a general purpose computer, a special computer, a computer network, or other programmable devices. The computer instructions may be stored in a computer-readable storage medium or transmitted from one computer-readable storage medium to another computer-readable storage medium. For example, the computer instructions may be transmitted from a website, a computer, a server, or a data center via a wired (such as coaxial cable, optical fiber, digital subscriber line (DSL)) or wireless (such as infrared, wireless, microwave, etc.) means to transmit to another website, computer, server or data center. The computer-readable storage media may be any available media that may be accessed by a computer or a data storage device such as a server, a data center, etc. that contains one or more available media integrated. Available media may be magnetic media (such as floppy disk, hard disk, magnetic tape), optical media (such as a DVD), or semiconductor media (such as Solid State Disk (SSD)), etc.

**Claims**

1. A communication method performed by a terminal device, **characterized by** comprising:

   determining (S201) a measurement result of a first cell; and
   determining (S202) whether the first cell satisfies a cell selection criterion corresponding to a first-type terminal device according to the cell measurement result of the first cell and a first-cell selection parameter corresponding to the first-type terminal device; wherein a capability of the first-type terminal device is lower than that of a second-type terminal device;
   wherein the determining a measurement result of a first cell, comprises:

   obtaining (501) at least one beam measurement value of the first cell; and
   generating (502) the measurement result of the first cell according to the at least one beam measurement value of the first cell and a first threshold value of the beam measurement value corresponding to the first-type terminal device.

2. The method according to claim 1, wherein the first-type terminal device corresponds to the first-cell selection parameter, and the second-type terminal device corresponds to a second-cell selection parameter; and the first-cell selection parameter is different from the second-cell selection parameter.

3. The method according to claim 2, wherein the first-cell selection parameter comprises at least one of the following: a threshold value of a received power, a threshold value of a signal quality, and an offset amount for preventing a ping-pong effect caused by radio environment fluctuations, a power-compensation value and a cell-reselection offset value.

4. The method according to claim 2 or 3, wherein the first-cell selection parameter is determined according to the second cell-selection parameter and a first correction value.

5. The method according to claim 4, wherein the first correction value is configured to correct the threshold value of the received power and the threshold value of the signal quality of the second-cell selection parameter.

6. The method according to any one of claims 1 to 5, wherein the first-cell selection parameter is configured for intra-frequency and/or inter-frequency cell reselection of the first-type terminal device.

7. The method according to any one of claims 1 to 6, wherein the cell measurement result of the first cell comprises a received power of the first cell and a signal quality of the first cell.

8. The method of claim 7, wherein the determining whether the first cell satisfies a cell selection criterion corresponding to a first-type terminal device, comprises:
   determining that the first cell satisfies the cell selection criterion corresponding to the first-type terminal device, in response to the received power of the first cell being greater than a first threshold and the signal quality of the first cell being greater than a second threshold.

9. The method according to claim 1, wherein the first threshold value is determined according to a second threshold value of the beam measurement value corresponding to the second-type of terminal device and a second correction value.

10. A communication method performed by a network device, comprising:

    sending (301) a first-cell selection parameter corresponding to a first-type terminal device to a terminal device and sending a first threshold value of the beam measurement value corresponding to the first-type terminal device to the terminal device
    to allow the terminal device to determine whether a first cell satisfies a cell selection criterion corresponding to the first-type terminal device according to a cell measurement result of the first cell and the first-cell selection parameter corresponding to the first-type terminal device after obtaining at least one beam measurement value of the first cell and generate the cell measurement result of the first cell according to the at least one beam measurement value of the first cell and the first threshold value of the beam measurement value corresponding to the first-type terminal device,

wherein a capability of the first-type terminal device is lower than that of a second-type terminal device.

11. The method of claim 10, wherein the first-type terminal device corresponds to the first-cell selection parameter, and the second-type terminal device corresponds to a second-cell selection parameter; and the first-cell selection parameter is different from the second-cell selection parameter.

12. A terminal device (700), comprising:

a measurement module (701), configured to obtain at least one beam measurement value of a first cell and generate a measurement result of the first cell according to the at least one beam measurement value of the first cell and a first threshold value of the beam measurement value corresponding to a first-type terminal device; a processing module (702), configured to determine whether the first cell satisfies a cell selection criterion corresponding to the first-type terminal device according to the cell measurement result of the first cell and a first-cell selection parameter corresponding to the first-type terminal device, wherein a capability of the first-type terminal device is lower than that of a second-type terminal device.

13. A network device (800), comprising:
a sending module (802), configured to send a first-cell selection parameter corresponding to a first-type terminal and configured to send a first threshold value of the beam device to a terminal device measurement value corresponding to the first-type terminal device to the terminal device to allow the terminal device to determine whether a first cell satisfies a cell selection criterion corresponding to the first-type terminal device according to a cell measurement result of the first cell and the first-cell selection parameter corresponding to the first-type terminal device after obtaining at least one beam measurement value of the first cell and generate the cell measurement result of the first cell according to the at least one beam measurement value of the first cell and the first threshold value of the beam measurement value corresponding to the first-type terminal device, wherein a capability of the first-type terminal device is lower than that of a second-type terminal device.

14. The network device (800) according to claim 13, wherein the first-type terminal device corresponds to the first-cell selection parameter, and the second-type terminal device corresponds to a second-cell selection parameter; and the first-cell selection parameter is different from the second-cell selection parameter.

**Patentansprüche**

1. Kommunikationsverfahren, das von einer Endgerätevorrichtung durchgeführt wird, **dadurch gekennzeichnet, dass** es Folgendes umfasst:

Bestimmen (S201) eines Messergebnisses einer ersten Zelle; und
Bestimmen (S202), ob die erste Zelle ein Zellenauswahlkriterium erfüllt, das einer Endgerätevorrichtung eines ersten Typs entspricht, gemäß dem Zellenmessergebnis der ersten Zelle und einem Parameter zur Auswahl einer ersten Zelle, der der Endgerätevorrichtung des ersten Typs entspricht; wobei eine Fähigkeit der Endgerätevorrichtung des ersten Typs niedriger ist als die einer Endgerätevorrichtung eines zweiten Typs; wobei das Bestimmen eines Messergebnisses einer ersten Zelle Folgendes umfasst:

Erhalten (501) mindestens eines Strahlmesswerts der ersten Zelle;
Erzeugen (502) des Messergebnisses der ersten Zelle gemäß dem mindestens einen Strahlmesswert der ersten Zelle und einem ersten Schwellenwert des Strahlmesswerts, der der Endgerätevorrichtung des ersten Typs entspricht.

2. Verfahren nach Anspruch 1, wobei die Endgerätevorrichtung des ersten Typs dem Parameter zur Auswahl der ersten Zelle entspricht und die Endgerätevorrichtung des zweiten Typs einem Parameter zur Auswahl einer zweiten Zelle entspricht; und der Parameter zur Auswahl der ersten Zelle sich von dem Parameter zur Auswahl der zweiten Zelle unterscheidet.

3. Verfahren nach Anspruch 2, wobei der Parameter zur Auswahl der ersten Zelle mindestens eines von Folgenden umfasst: einen Schwellenwert einer Empfangsleistung, einen Schwellenwert einer Signalqualität und einen Offsetbetrag zum Verhindern eines Ping-Pong-Effekts, der durch Funkumgebungsschwankungen verursacht wird, einen Leistungskompensationswert und einen Zellenneuauswahl-Offsetwert.

4. Verfahren nach Anspruch 2 oder 3, wobei der Parameter zur Auswahl der ersten Zelle gemäß dem Parameter zur Auswahl der zweiten Zelle und einem ersten Korrekturwert bestimmt wird.

5. Verfahren nach Anspruch 4, wobei der erste Korrekturwert dazu ausgelegt ist, den Schwellenwert der Empfangsleistung und den Schwellenwert der Signalqualität des Parameters zur Auswahl der zweiten Zelle zu korrigieren.

6. Verfahren nach einem der Ansprüche 1 bis 5, wobei der Parameter zur Auswahl der ersten Zelle für Intrafrequenz- und/oder Interfrequenz-Zellenneuauswahl der Endgerätevorrichtung des ersten Typs ausgelegt ist.

7. Verfahren nach einem der Ansprüche 1 bis 6, wobei das Zellenmessergebnis der ersten Zelle eine Empfangsleistung der ersten Zelle und eine Signalqualität der ersten Zelle umfasst.

8. Verfahren nach Anspruch 7, wobei das Bestimmen, ob die erste Zelle ein Zellenauswahlkriterium erfüllt, das einer Endgerätevorrichtung eines ersten Typs entspricht, Folgendes umfasst:
Bestimmen, dass die erste Zelle das Zellenauswahlkriterium erfüllt, das der Endgerätevorrichtung des ersten Typs entspricht, in Reaktion darauf, dass die Empfangsleistung der ersten Zelle größer ist als ein erster Schwellenwert und die Signalqualität der ersten Zelle größer ist als ein zweiter Schwellenwert.

9. Verfahren nach Anspruch 1, wobei der erste Schwellenwert gemäß einem zweiten Schwellenwert des Strahlmesswerts, der der Endgerätevorrichtung des zweiten Typs entspricht, und einem zweiten Korrekturwert bestimmt wird.

10. Kommunikationsverfahren, das von einer Netzwerkvorrichtung durchgeführt wird und Folgendes umfasst:
Senden (301) eines Parameters zur Auswahl einer ersten Zelle, der einer Endgerätevorrichtung eines ersten Typs entspricht, an eine Endgerätevorrichtung und Senden eines ersten Schwellenwerts des Strahlmesswerts, der der Endgerätevorrichtung des ersten Typs entspricht, an die Endgerätevorrichtung, um der Endgerätevorrichtung zu ermöglichen, gemäß einem Zellenmessergebnis der ersten Zelle und dem Parameter zur Auswahl der ersten Zelle, der der Endgerätvorrichtung des ersten Typs entspricht, zu bestimmen, ob eine erste Zelle ein Zellenauswahlkriterium erfüllt, das der Endgerätevorrichtung des ersten Typs entspricht, nachdem mindestens ein Strahlmesswert der ersten Zelle erhalten und das Zellenmessergebnis der ersten Zelle gemäß dem mindestens einen Strahlmesswert der ersten Zelle und dem ersten Schwellenwert des Strahlmesswerts, der der Endgerätevorrichtung des ersten Typs entspricht, erzeugt wurde, wobei eine Fähigkeit der Endgerätevorrichtung des ersten Typs niedriger ist als die einer Endgerätevorrichtung des zweiten Typs.

11. Verfahren nach Anspruch 10, wobei die Endgerätevorrichtung des ersten Typs dem Parameter zur Auswahl der ersten Zelle entspricht und die Endgerätevorrichtung des zweiten Typs einem Parameter zur Auswahl einer zweiten Zelle entspricht; und der Parameter zur Auswahl der ersten Zelle sich von dem Parameter zur Auswahl der zweiten Zelle unterscheidet.

12. Endgerätevorrichtung (700), umfassend:

ein Messmodul (701), das dazu ausgelegt ist, mindestens einen Strahlmesswert einer ersten Zelle zu erhalten und ein Messergebnis der ersten Zelle gemäß dem mindestens einen Strahlmesswert der ersten Zelle und einem ersten Schwellenwert des Strahlmesswerts zu erzeugen, der der Endgerätevorrichtung des ersten Typs entspricht;
ein Verarbeitungsmodul (702), das dazu ausgelegt ist, gemäß dem Zellenmessergebnis der ersten Zelle und einem Parameter zur Auswahl einer ersten Zelle, der der ersten Endgerätevorrichtung des ersten Typs entspricht, zu bestimmen, ob die erste Zelle ein Zellenauswahlkriterium erfüllt, das der Endgerätevorrichtung des ersten Typs entspricht; wobei eine Fähigkeit der Endgerätevorrichtung des ersten Typs niedriger ist als die einer Endgerätevorrichtung eines zweiten Typs.

13. Netzwerkvorrichtung (800), umfassend:
ein Sendemodul (802), das dazu ausgelegt ist, einen Parameter zur Auswahl einer ersten Zelle, der einer Endgerätevorrichtung eines ersten Typs entspricht, an die Endgerätevorrichtung zu senden, und dazu ausgelegt ist, einen ersten Schwellenwert des Strahlmesswerts, der der Endgerätevorrichtung des ersten Typs entspricht, an die Endgerätevorrichtung zu senden, um der Endgerätevorrichtung zu ermöglichen, gemäß einem Zellenmessergebnis der ersten Zelle und dem Parameter zur Auswahl der ersten Zelle, der der Endgerätvorrichtung des ersten Typs entspricht, zu bestimmen, ob eine erste Zelle ein Zellenauswahlkriterium erfüllt, das der Endgerätevorrichtung des ersten Typs entspricht, nachdem mindestens ein Strahlmesswert der ersten Zelle erhalten und das Zellenmessergebnis der ersten Zelle gemäß dem mindestens einen Strahlmesswert der Zelle und dem ersten Schwellenwert des Strahlmesswerts, der der Endgerätevorrichtung des ersten Typs entspricht, erzeugt wurde, wobei eine Fähigkeit der Endgerätevorrichtung des ersten Typs niedriger ist als die einer Endgerätevorrichtung des zweiten Typs.

14. Netzwerkvorrichtung (800) nach Anspruch 13, wobei die Endgerätevorrichtung des ersten Typs dem Parameter zur Auswahl der ersten Zelle entspricht und die Endgerätevorrichtung des zweiten Typs einem Parameter zur Auswahl einer zweiten Zelle entspricht; und der Parameter zur Auswahl der ersten Zelle sich von dem Parameter zur Auswahl der zweiten Zelle unterscheidet.

**Revendications**

1. Procédé de communication effectué par un dispositif terminal, **caractérisé en ce qu'**il comprend les étapes consistant à :

   déterminer (S201) un résultat de mesure d'une première cellule ; et
   déterminer (S202) si la première cellule vérifie un critère de sélection de cellule correspondant à un dispositif terminal de premier type en fonction du résultat de mesure de cellule de la première cellule et d'un paramètre de sélection de première cellule correspondant au dispositif terminal de premier type ;
   dans lequel une capacité du dispositif terminal de premier type est inférieure à celle d'un dispositif terminal de deuxième type ;
   dans lequel la détermination d'un résultat de mesure d'une première cellule comprend les étapes consistant à :

   obtenir (501) au moins une valeur de mesure de faisceau de la première cellule ; et
   générer (502) le résultat de mesure de la première cellule en fonction de l'au moins une valeur de mesure de faisceau de la première cellule et d'une première valeur de seuil de la valeur de mesure de faisceau correspondant au dispositif terminal de premier type.

2. Procédé selon la revendication 1, dans lequel le dispositif terminal de premier type correspond au paramètre de sélection de première cellule, et le dispositif terminal de deuxième type correspond à un paramètre de sélection de deuxième cellule ; et le paramètre de sélection de première cellule est différent du paramètre de sélection de deuxième cellule.

3. Procédé selon la revendication 2, dans lequel le paramètre de sélection de première cellule comprend au moins un des éléments suivants : une valeur de seuil d'une puissance reçue, une valeur de seuil d'une qualité de signal, et une quantité de décalage servant à prévenir un effet de ping-pong causé par des fluctuations d'environnement radio, une valeur de compensation de puissance et une valeur de décalage de resélection de cellule.

4. Procédé selon la revendication 2 ou 3, dans lequel le paramètre de sélection de première cellule est déterminé en fonction du paramètre de sélection de deuxième cellule et d'une première valeur de correction.

5. Procédé selon la revendication 4, dans lequel la première valeur de correction est configurée pour corriger la valeur de seuil de la puissance reçue et la valeur de seuil de la qualité de signal du paramètre de sélection de deuxième cellule.

6. Procédé selon l'une quelconque des revendications 1 à 5, dans lequel le paramètre de sélection de première cellule est configuré pour la resélection de cellule intra-fréquentielle et/ou inter-fréquentielle du dispositif terminal de premier type.

7. Procédé selon l'une quelconque des revendications 1 à 6, dans lequel le résultat de mesure de cellule de la première cellule comprend une puissance reçue de la première cellule et une qualité de signal de la première cellule.

8. Procédé selon la revendication 7, dans lequel la détermination du fait que la première cellule vérifie ou non un critère de sélection de cellule correspondant à un dispositif terminal de premier type consiste à :

déterminer que la première cellule vérifie le critère de sélection de cellule correspondant au dispositif terminal de premier type, en réponse au fait que la puissance reçue de la première cellule est supérieure à un premier seuil et que la qualité de signal de la première cellule est supérieure à un deuxième seuil.

9. Procédé selon la revendication 1, dans lequel la première valeur de seuil est déterminée en fonction d'une deuxième valeur de seuil de la valeur de mesure de faisceau correspondant au deuxième type de dispositif terminal, et d'une deuxième valeur de correction.

10. Procédé de communication effectué par un dispositif de réseau, comprenant les étapes consistant à :

envoyer (301) à un dispositif terminal un paramètre de sélection de première cellule correspondant à un dispositif terminal de premier type et envoyer au dispositif terminal une première valeur de seuil de la valeur de mesure de faisceau correspondant au dispositif terminal de premier type pour autoriser le dispositif terminal à déterminer si une première cellule vérifie un critère de sélection de cellule correspondant au dispositif terminal de premier type en fonction d'un résultat de mesure de cellule de la première cellule et du paramètre de sélection de première cellule correspondant au dispositif terminal de premier type après l'obtention d'au moins une valeur de mesure de faisceau de la première cellule et générer le résultat de mesure de cellule de la première cellule en fonction de l'au moins une valeur de mesure de faisceau de la première cellule et de la première valeur de seuil de la valeur de mesure de faisceau correspondant au dispositif terminal de premier type,
dans lequel une capacité du dispositif terminal de premier type est inférieure à celle d'un dispositif terminal de deuxième type.

11. Procédé selon la revendication 10, dans lequel le dispositif terminal de premier type correspond au paramètre de sélection de première cellule, et le dispositif terminal de deuxième type correspond à un paramètre de sélection de deuxième cellule ; et le paramètre de sélection de première cellule est différent du paramètre de sélection de deuxième cellule.

12. Dispositif terminal (700), comprenant :

un module de mesure (701), configuré pour obtenir au moins une valeur de mesure de faisceau de la première cellule et générer un résultat de mesure de la première cellule en fonction de l'au moins une valeur de mesure de faisceau de la première cellule et d'une première valeur de seuil de la valeur de mesure de faisceau correspondant à un dispositif terminal de premier type ;
un module de traitement (702), configuré pour déterminer si la première cellule vérifie un critère de sélection de cellule correspondant au dispositif terminal de premier type en fonction du résultat de mesure de cellule de la première cellule et d'un paramètre de sélection de première cellule correspondant au dispositif terminal de premier type ;
dans lequel une capacité du dispositif terminal de premier type est inférieure à celle d'un dispositif terminal de deuxième type.

13. Dispositif de réseau (800), comprenant :
un module d'envoi (802), configuré pour envoyer à un dispositif terminal un paramètre de sélection de première cellule correspondant à un dispositif terminal de premier type et configuré pour envoyer au dispositif terminal une première valeur de seuil de la valeur de mesure de faisceau correspondant au dispositif terminal de premier type pour autoriser le dispositif terminal à déterminer si une première cellule vérifie un critère de sélection de cellule correspondant au dispositif terminal de premier type en fonction d'un résultat de mesure de cellule de la première cellule et du paramètre de sélection de première cellule correspondant au dispositif terminal de premier type après l'obtention d'au moins une valeur de mesure de faisceau de la première cellule et générer le résultat de mesure de cellule de la première cellule en fonction de l'au moins une valeur de mesure de faisceau de la première cellule et de la première valeur de seuil de la valeur de mesure de faisceau correspondant au dispositif terminal de premier type, dans lequel une capacité du dispositif terminal de premier type est inférieure à celle d'un dispositif terminal de deuxième type.

14. Dispositif de réseau (800) selon la revendication 13, dans lequel le dispositif terminal de premier type correspond au paramètre de sélection de première cellule, et le dispositif terminal de deuxième type correspond à un paramètre de sélection de deuxième cellule ; et le paramètre de sélection de première cellule est différent du paramètre de sélection de deuxième cellule.

**FIG. 1**

Determining a measurement result of a first cell | S201

Determining whether the first cell satisfies the cell selection criterion corresponding to the first -type terminal device according to the cell measurement result of the first cell and the first-cell selection parameter corresponding to the first- type terminal device | S202

**FIG. 2**

```
┌─────────────────────┐                          ┌─────────────────────┐
│   RedCap Terminal   │                          │   Network device    │
│      device         │                          │                     │
└─────────────────────┘                          └─────────────────────┘
          │                                                  │
          │                                                  │
          │  S 3 0 1 , sending the first - cell selection    │
          │  parameter corresponding to the RedCap terminal  │
          │◄─────────────────────────────────────────────────│
          │                                                  │
┌─────────────────────────────────┐                          │
│ S302, determining the measurement│                         │
│ result of the first cell         │                         │
└─────────────────────────────────┘                          │
          │                                                  │
┌─────────────────────────────────┐                          │
│ S303, determining whether the   │                          │
│ first cell satisfies the cell   │                          │
│ selection criterion             │                          │
│ corresponding to the RedCap     │                          │
│ terminal according to the cell  │                          │
│ measurement result of the first │                          │
│ cell and the first- cell        │                          │
│ selection parameter             │                          │
│ corresponding to the RedCap     │                          │
│ terminal                        │                          │
└─────────────────────────────────┘
          │
```

**FIG. 3**

Determining the measurement result of the first cell — S401

Determining the first-cell selection parameter according to a second-cell selection parameter and a first correction value corresponding to an enhanced mobile broadband terminal — S402

Determining whether the first cell satisfies the cell selection criterion corresponding to the RedCap terminal according to the cell measurement result of the first cell and the first-cell selection parameter corresponding to the RedCap terminal — S403

**FIG. 4**

Obtaining at least one beam measurement value of the first cell — S501

Generating a measurement result of the first cell according to the at least one beam measurement value of the first cell and a first threshold value of the beam measurement value corresponding to the first- type terminal device — S502

Determining whether the first cell satisfies the cell selection criterion corresponding to the first-type terminal device according to the cell measurement result of the first cell and the first-cell selection parameter corresponding to the first-type terminal device — S503

**FIG. 5**

Determining whether to start a neighboring cell measurement according to a cell measurement result of a second cell of the first-type terminal device and a first measurement startup parameter corresponding to the first-type terminal device — S601

Determining the measurement result of the first cell — S602

Determining whether the first cell satisfies the cell selection criterion corresponding to the first-type terminal device according to the cell measurement result of the first cell and the first-cell selection parameter corresponding to the first-type terminal device — S603

FIG. 6

Communication apparatus

Measurement module — 701

Processing module — 702

— 700

FIG. 7

Communication apparatus

Receiving module — 801

— 800

Sending module — 802

**FIG. 8**

Electronic device

Processor — 91

Power supply — 95

— 92

Memory

— 96

Transmitter — 94

Receiver — 93

Communication port — 97

**FIG. 9**